# EUROPEAN PATENT SPECIFICATION

(11) **EP 4 516 670 B1**
(45) Date of publication and mention of the grant of the patent: **09.12.2026**
(21) Application number: 24197231.4
(22) Date of filing: 29.08.2024
(51) Int. Cl.: B64D 5/00, B64D 25/08, B64U 70/20, B64C 3/56, B64U 10/25, B64U 30/12, B64C 31/02, B64U 101/60, B64D 25/10

(54) **AIRCRAFT SURVIVAL KIT GLIDER**
SEGELFLUGZEUG FÜR EIN RETTUNGSPAKET
AVION PLANEUR POUR UN KIT DE SURVIE

(30) Priority: 29.08.2023 US 202318458017
(43) Date of publication of application: 05.03.2025
(73) Proprietor: Rockwell Collins, Inc., Cedar Rapids, IA 52498 (US)
(72) Inventor: HUSBAND, Casey, Burlington, VT, 05401 (US); SANTOS, Julia Francesca, Cedar Rapids, IA, 52404 (US); COOKE, Grace Elizabeth, Cedar Rapids, IA, 52402 (US); TEWKSBURY, Allison, Portland, CT, 06480 (US); VAN SCHAICK, Nathan, Marion, IA, 52302 (US); NINER, Alex James, Wylie, TX, 75098 (US); HAMPTON, John L., Bradenton, FL, 34202 (US)
(74) Representative: Dehns

(56) References cited:
- WO-A1-89/02393
- US-A1- 2005 218 260
- US-A1- 2010 065 288
- US-A1- 2017 240 276
- US-A1- 2018 086 434
- US-A1- 2022 001 983

## Description

### FIELD

The present disclosure generally relates air-to-surface supply containers and, more particularly, to supply containers that are physically separate from the ejection seat.

### BACKGROUND

Various aircraft have one or more ejection seats to displace an occupant from the host aircraft under certain circumstances. Representative components incorporated by an ejection seat may include a main parachute, a drogue parachute, and a survival kit. Survival kits for at least certain ejection seats are stored physically on and/or in the ejection seat. There is limited space available on, or in, the ejection seat and in the cockpit area more generally. Current survival kits may fill the existing limited space available. Design constraints may prevent additional space being allocated to a survival kit in the cockpit area and/or on the ejection seat. WO 89/02393 A1 relates to an airman's ejector seat, which has the ability to fly after ejection, has the ordinary ejector seat facilities of shooting out of the aircraft along guides, then automatically separating from the airman, who floats to earth on an automatically opened parachute. Also there is the usual survival kit for various situations. In addition the seat has the option of flying to a place of safety. Modern zones of conflict may include a greater variety of physical environments, longer distances flown, and may demand larger survival kits, including additional equipment, than current systems are capable of supporting. US 2017/240276 A1 relates to an unmanned aerial glider, US 2018/086434 A1 relates to an aircraft for autonomous aerial delivery, US 2010/065288 relates to a vehicle for aerial delivery of fire retardant, US 2022/001983 A1 relates to a precision delivery vehicle, US 2005/218260 A1 relates to an air-launched aircraft.

Traditional cargo aircraft deliver supplies by air dropping through a large rear door. Cargo aircraft are more detectable and are required to be in close proximity to the delivery point. Bomber, Fighter, or UAV type aircraft are less detectable, fly at higher altitudes, and can deliver at long distance. These aircraft have launching points or bays that have adaptable standardized interfaces to mount and deliver weapons.

### SUMMARY

A system including a supply glider is provided as defined by claim 1.

Features of various embodiments are set out in the dependent claims.

The foregoing features and elements may be combined in any combination that falls within the scope of the claims. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1A illustrates a supply glider coupled to an underside of a host aircraft, in accordance with various embodiments.
FIG. 1B illustrates a supply glider being deployed from an underside of a host aircraft, in accordance with various embodiments.
FIG. 2 illustrates a supply glider being deployed from a compartment in a host aircraft, in accordance with various embodiments.
FIGS. 3A, 3B, and 3C illustrate a supply glider that is deployable from a host aircraft, in accordance with various embodiments.
FIG. 4 illustrates a supply glider that is deployable from a host aircraft, in accordance with various embodiments.
FIG. 5 illustrates a system for controlling the flight of a supply glider, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the invention as defined by the claims. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the scope of the invention as defined by the claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein is a survival kit system that may be used during ejection from a host aircraft, for resupply of distant personnel, and/or for search and rescue missions, among others. In various embodiments, the survival kit system may include a supply glider. In various embodiments, the supply glider may include a steering mechanism, a container, and a guidance computer that can be mounted in any location of an airframe. In various embodiments, the supply glider may be launched from the host aircraft close in time to deployment of an ejection seat of the host aircraft. In various embodiments, the supply glider may be coupled to a hardpoint on the host aircraft. In various embodiments, the supply glider may be mounted in an integrated mount (e.g., internal to the host aircraft).

In various embodiments, shortly after launch, the supply glider may deploy one or more mechanisms for steering, including wings, stabilizers, stabilators, and/or steerable parachutes. In various embodiments, the supply glider may include an integrated guidance computer and systems to guide the supply glider. In various embodiments, the supply glider may track the ejection seat. In various embodiments, the supply glider may communicate electronically (e.g., wireless communication) with the aircrew and/or the ejection seat. In various embodiments, the supply glider may land at a safe distance away from the aircrew (e.g., about 100 feet (about 30.5 meters) away). In various embodiments, the supply glider may include a container that holds the survival kit.

In various embodiments, the supply glider may be used similar to other components launched from aircraft hardpoints. In various embodiments, the supply glider may increase the size and amount of survival equipment for aircrew during an ejection. In various embodiments, the supply glider may be used to provide survival gear and/or supplies to personnel in a remote zone of conflict. In various embodiments, the supply glider may be used to provide survival gear and/or supplies for remote search and rescue missions. The supply glider, in various embodiments, may expand operational capabilities. In various embodiments, the supply glider may be difficult to detect due to no engine noise, a low-observable profile and small size, and a low-observable flight path.

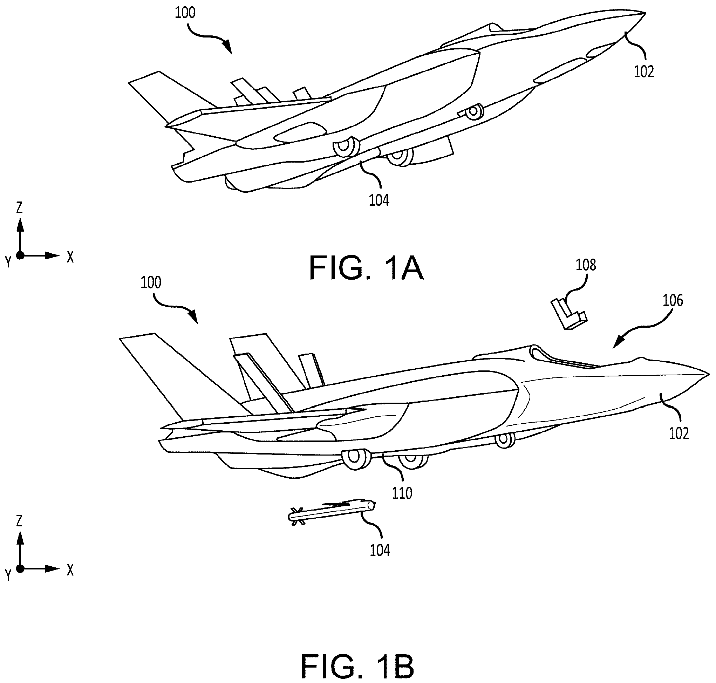

Referring now to FIGS. 1A and 1B, a survival kit deployment system 100 is illustrated, in accordance with various embodiments. Survival kit deployment system 100 includes a host aircraft 102 and a supply glider 104. Aircraft 102 includes a cockpit 106, one or more ejection seats 108 located within cockpit 106, and one or more hardpoint mounts 110. Ejection seat 108 is configured to protect an aircrew member and to eject from aircraft 102 in response to an ejection signal. In various embodiments, aircraft 102 may further include a bay or other mounting point on aircraft 102. In various embodiments, aircraft 102 may be any number of arial vehicles including a jet, a bomber, a transport, an unmanned arial vehicle, a helicopter, or drone, among other aircraft including one or more hardpoint mounts.

Supply glider 104 is configured to be launched from aircraft 102, and more specifically from hardpoint mount 110. In various embodiments, supply glider 104 may be launched in response to an ejection signal that is activated by an ejection handle. In various embodiments, supply glider 104 may be launched simultaneously with ejection seat 108. In various embodiments, supply glider 104 may be launched a short time after ejection seat 108, such as about 0.1 seconds to about 10 seconds, and more specifically, about 0.5 to about 2 seconds after ejection seat 108 is launched. In various embodiments, supply glider 104 may be launched in response to a launch signal from a launch controller that is activated by an aircrew member. In various embodiments, the launch signal may be an electronic signal. In various embodiments, the launch signal may be a mechanical actuation.

After launch, supply glider 104 may deploy steering mechanisms including wings, stabilizers, stabilators, and/or steerable parachutes. In various embodiments, supply glider 104 may include one or more sensors and one or more controller operably coupled to the one or more sensors. The one or more controllers may be configured to guide supply glider 104 to a destination. In various embodiments, the destination may be a pre-determined point. In various embodiments, the destination may be determined by the onboard sensors. In various embodiments, supply glider 104 is configured to follow ejection seat 108 at a safe distance. In various embodiments, the safe distance may be about 50 feet (about 15.2 meters) to about 1,000 feet (about 305 meters), and more specifically, about 200 feet (about 61 meters) to about 500 feet (about 152 meters). Personnel on the ground may retrieve the contents of supply glider 104 from an integral container after supply glider 104 lands.

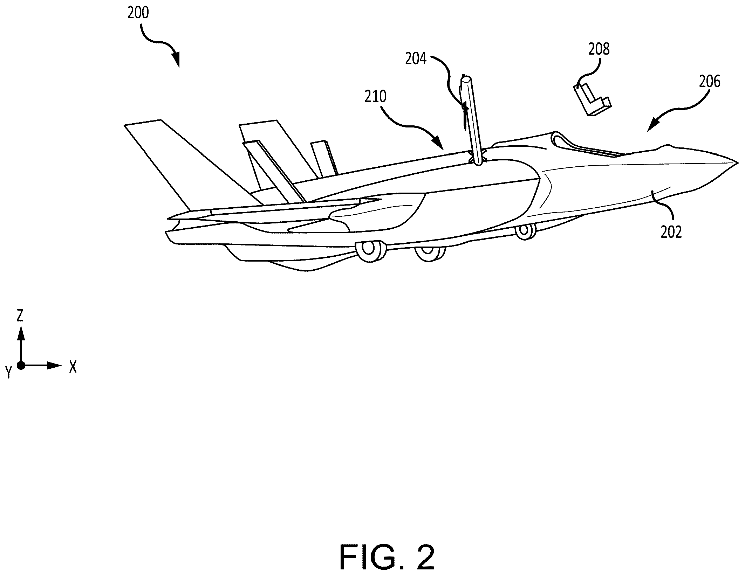

Referring now to FIG. 2, a survival kit deployment system 200 is illustrated, in accordance with various embodiments. Survival kit deployment system 200 includes a host aircraft 202 and a supply glider 204. Aircraft 202 includes a cockpit 206, one or more ejection seats 208 located within cockpit 206, and one or more bays 210. Ejection seat 208 is configured to protect an aircrew member and to eject from aircraft 202 in response to an ejection signal. In various embodiments, aircraft 202 may be any number of arial vehicles including a jet, a bomber, a transport, an unmanned arial vehicle, a helicopter, or drone, among other aircraft including one or more bays. In various embodiments, bay 210 may be located aft (e.g., in the negative x-direction) of cockpit 206. In various embodiments, bay 210 may include a door configured to secure and protect supply glider 204. In various embodiments, bay 210 may be located any number of locations within aircraft 202. That is, aircraft 202 may be designed, either during initial design or during a redesign, to incorporate bay 210 in aircraft 202.

Supply glider 204 may be launched from aircraft 202, and more specifically from bay 210. In various embodiments, supply glider 204 may be launched in response to an ejection signal. In various embodiments, supply glider 204 may be launch simultaneously with ejection seat 208. In various embodiments, supply glider 204 may be launched a short time after ejection seat 208, such as about 0.1 seconds to about 10 seconds, and more specifically, about 0.5 to about 2 seconds after ejection seat 208 is launched. In various embodiments, supply glider 204 may be launched in response to a launch signal from an aircrew member.

After launch, supply glider 204 may deploy steering mechanisms including wings, stabilizers, stabilators, and/or steerable parachutes. In various embodiments, supply glider 204 may include one or more sensors and one or more controller operably coupled to the one or more sensors. The one or more controllers may be configured to guide supply glider 204 to a destination. In various embodiments, the destination may be a pre-determined point. In various embodiments, the destination may be determined by the onboard sensors. In various embodiments, supply glider 204 is configured to follow ejection seat 208 at a safe distance. In various embodiments, the safe distance may be about 50 feet (about 15.2 meters) to about 1,000 feet (about 305 meters), and more specifically, about 200 feet (about 61 meters) to about 500 feet (about 152 meters). Personnel on the ground may retrieve the contents of supply glider 204 from an integral container after supply glider 204 lands. In various embodiments, the launch signal may be an electronic signal. In various embodiments, the launch signal may be a mechanical actuation.

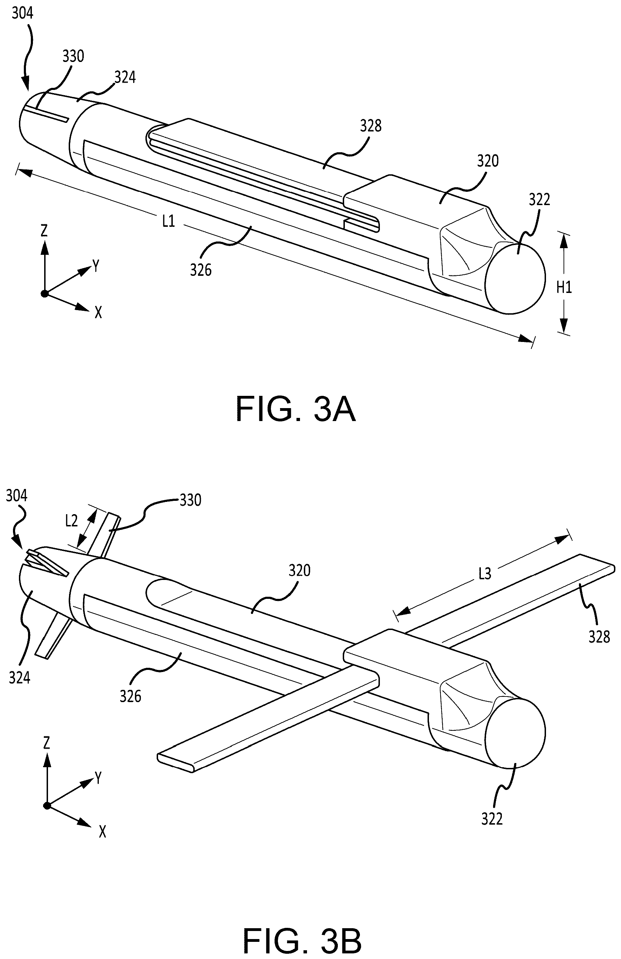

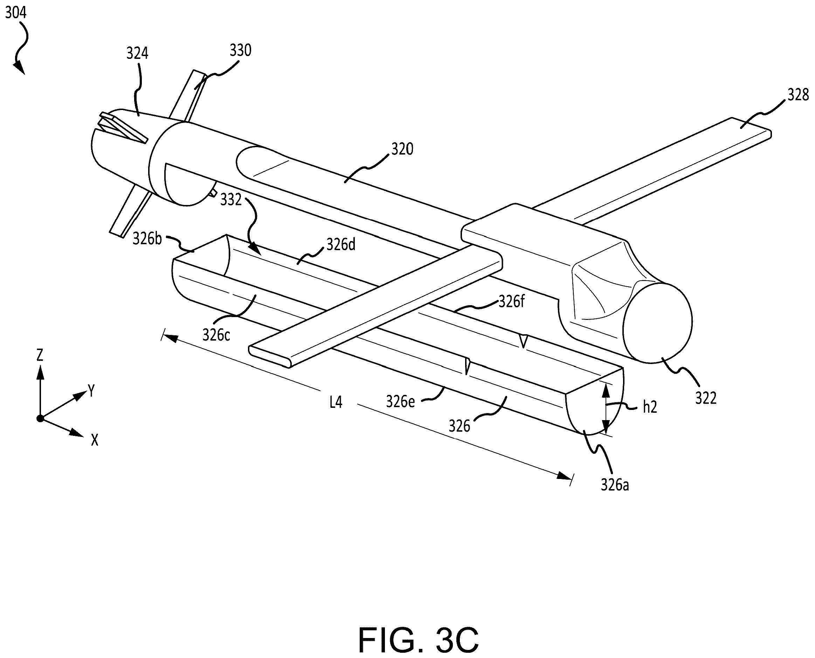

Referring now to FIGS. 3A-3B, a supply glider 304 for carrying survival gear and/or supplies is illustrated, in accordance with various embodiments. Supply glider 304 includes a body 320, a nose 322, a tail 324, a container 326, wings 328, and stabilators 330. In various embodiments, supply glider 304 may further include stabilizers and/or steerable parachutes. Supply glider 304 further includes one **or more** sensors, one or more controllers, and/or one or more communication modules.

Body 320 is coupled to nose 322 at a first end (e.g., the positive x-direction) and to tail 324 at a second end (e.g., the negative x-direction). In various embodiments, body 320, nose 322, and tail 324 may be a single, monolithic construction. In various embodiments, body 320, nose 322, and tail 324 may be separate components that are joined together (e.g., welded, bolts, etc.). Body 320, including nose 322 and tail 324, has a length L1 and a height H1. In various embodiments, length L1 may be about 35 inches (about 88.9 centimeters) to about 105 inches (about 267 centimeters), and more specifically, about 50 inches (about 127 centimeters) to about 85 inches (about 216 centimeters). In various embodiments, height H1 may be about 3 inches (about 7.62 centimeters) to about 11 inches (about 27.9 centimeters), and more specifically, about 5 inches (about 12.7 centimeters) to about 9 inches (about 22.9 centimeters). In various embodiments, length L1 height H1 may be varied depending on the payload weight, desired travel distance, aircraft type, or operational environment, among other considerations.

Nose 322 is coupled to a forward portion (e.g., in the positive x-direction) of body 320. Nose 322 may, in various embodiments, may be rounded, blunt, conical, frustoconical, or elongated in shape, among other shapes and configurations. In various embodiments, nose 322 may house one or more sensors, one or more controllers, and/or one or more communication modules. In various embodiments, the one or more sensors, one or more controller, and/or one or more communication modules may be mounted at any location within body 320.

In various embodiments, the one or more sensors may include an altimeter, an air speed sensor, a pressure sensor, a camera, a force sensor, a position sensor (e.g., global position satellite (GPS) system), or a vibration sensor, among others. In various embodiments, the one or more communication modules may include IEEE 802.15.1 ("Bluetooth"), IEEE 802.15.4 ("Zigbee"), IEEE 802.11 ("Wi-Fi"), cellular (e.g., 3G, 4G, 5G, etc.), satellite, or other radio frequency (RF) modules (e.g., frequency modulation (FM), amplitude modulation, etc.), among others.

Tail 324 is coupled to an aft portion (e.g., in the negative x-direction) of body 320. Tail 324 houses stabilators 330. In various embodiments, tail 324 may be rounded, blunt, conical, frustoconical, or elongated in shape.

Wings 328 may be retractable, in various embodiments. That is, wings 328 are configured to be stored and transported in a retracted state, as illustrated in FIG. 3A, and to move to an extended state in response to being deployed, as illustrated in FIG. 3B. In various embodiments, wings 328 may be a single component or multiple separate components. In various embodiments, a wingspan of wings 328 may be about 50% to about 100% of length L1, and more specifically, about 75% to about 90%. In various embodiments, each separate wing of wings 328 has a length L3 that may be about 25% to about 50% of length L1, and more specifically, about 35% to about 45% of length L1. In various embodiments, wings 328 may be implemented as simple folding wings that break and articulate, or fold, upward (e.g., in the positive z-direction) or that fold downward (e.g., in the negative z-direction). In various embodiments, wings 328 may be implemented as aftward folding wings that break and articulate, or fold, aftward (e.g., in the negative x-direction). In various embodiments, wings 328 may include multiple articulating points. In various embodiments, wings 328 may be implemented as over-swept wings that sweep aftward (e.g., in the negative x-direction), either partially or completely, for storage, as illustrated in FIGS. 3A and 3B. In various embodiments, wings 328 may be implemented as a single wing that rotates about a single pivot point from a stored position to a deployed position.

Stabilators 330, in various embodiments, may be retractable. Each stabilator 330 may be coupled to tail 324 at a single point and be configured to retract for storage, as illustrated in FIG. 3A, and to extend in response to being deployed, as illustrated in FIG. 3B. In various embodiments, each stabilator 330 may be inline with body 320 (e.g., along the x-axis) when stored. In various embodiments, each stabilator 330 may be orthogonal to body 320 (e.g., orthogonal to the x-axis) when fully deployed. In various embodiments, each stabilator 330 may be deployed to a position between the stored position and the fully deployed position.

Container 326 is coupled to body 320, and more specifically, is detachably coupled to body 320. That is, container 326 is configured to be attached to body 320 and to be detached from body 320. In various embodiments, container 326 may be configured to detachably couple to a top portion of body 320 (e.g., in the positive z-direction) and thereby form a bottom portion of body 320 (e.g., in the negative z-direction). In various embodiments, body 320 and/or container 326 may include one or more gaskets, seals, or other components to seal the connection between container 326 and body 320. In various embodiments, container 326 may be detachably coupled to body 320 using mechanical attachments such as bolt latches, spring latches, cam latches, compression latches, slam latches, or rotary latches, among others. In various embodiments, container 326 may include one or more locks to secure container 326 to body 320. In various embodiments, the mechanical attachments and/or locks may be configured to be operated and/or opened without the use of tools. In various embodiments, the mechanical attachments and/or locks may be configured to be operated using tools, keys, and/or electronic devices. In various embodiments, the body of the mechanical attachment may be coupled to body 320. In various embodiments, the body of the mechanical attachment may be coupled to container 326.

In various embodiments, a seal (e.g., an O-ring) disposed between body 320 and container 326 to provide a weather seal. In various embodiments, body 320 and container 326 may include a tongue and groove configuration to facilitate the connection between body 320 and container 326. In various embodiments, container 326 may slide vertically (e.g., in the positive direction) onto body 320. In various embodiments, container 326 may slide horizontally (e.g., in the positive or negative y-direction) onto body 320. In various embodiments, container 326 may be press fit onto body 320. That is, there may be little to no space between container 326 and body 320 and container 326 is secured to body 320 using one or more mechanical attachments and/or locks as described above. In various embodiments, body 320 may act as container 326 itself.

Container 326 has a compartment 332, a length L4, a width W1, and a height H2. In various embodiments, length L4 may be about 50% to about 90% of length L1, and more specifically, about 75% to about 85% of length L1. In various embodiments, width W1, at the widest point of container 326, may be about equal to height H1. In various embodiments, height H2 may be about 50% to about 90% of height H1, and more specifically, about 60% to about 80% of height H1. In various embodiments, compartment 332 may extend from a first end 326a of container 326 (e.g., in the negative x-direction) to a second end 326b of container 326 (e.g., in the positive x-direction), from a first side 326c of container 326 (e.g., in the negative y-direction) to a second side 326d of container 326 (e.g., in the positive y-direction), and from a 326e bottom of container 326 (e.g., in the negative z-direction) to an open top 326f of container 326 (e.g., in the positive z-direction).

Container 326 may be loaded with but not limited to medical supplies, clothing, food, water, shelter, cooking/drinking devices, strobes, communication devices, small arms, ammunition, and/or explosives, among other items. In various embodiments, container 326 may further include dividers to separate cargo within container 326 to minimize disturbance to the flight of supply glider 304. Bottom 326e, in various embodiments, may be reinforced to provide protection for container 326 from rough terrain during landing of supply glider 304. In various embodiments, first end 326a, second end 326b, first side 326c, and/or second side 326d may be reinforced to provide protection for container 326 form rough terrain during landing of supply glider 304. That is, the walls of container 326 may be thicker in some areas than in other areas, there may be additional materials applied to the walls of container 326, and/or container 326 may be manufactured from multiple different materials.

Supply glider 304 may, in various embodiments, be manufactured using low-visibility materials that are low visibility visually, electronically, or a combination of the two. The size of supply glider 304 may, in various embodiments, reduce the visibility of supply glider 304 visually, electronically, or both. In various embodiments, and in different configurations, supply glider 304 may be able to glide, unassisted, about 100 miles (about 161 kilometers) or more. That is, in various embodiments, supply glider 304 does not include an engine and may glide from launch to landing about 100 miles (about 161 kilometers) or more. This provides expanded options for use not only in conjunction with an ejection seat deployment but also in sending supplies long distance over rough terrain for search and rescue operations or into disputed zones or zones of conflict. In various embodiments, supply glider 304 may include an engine or other form of propulsion for maneuverability or extended range.

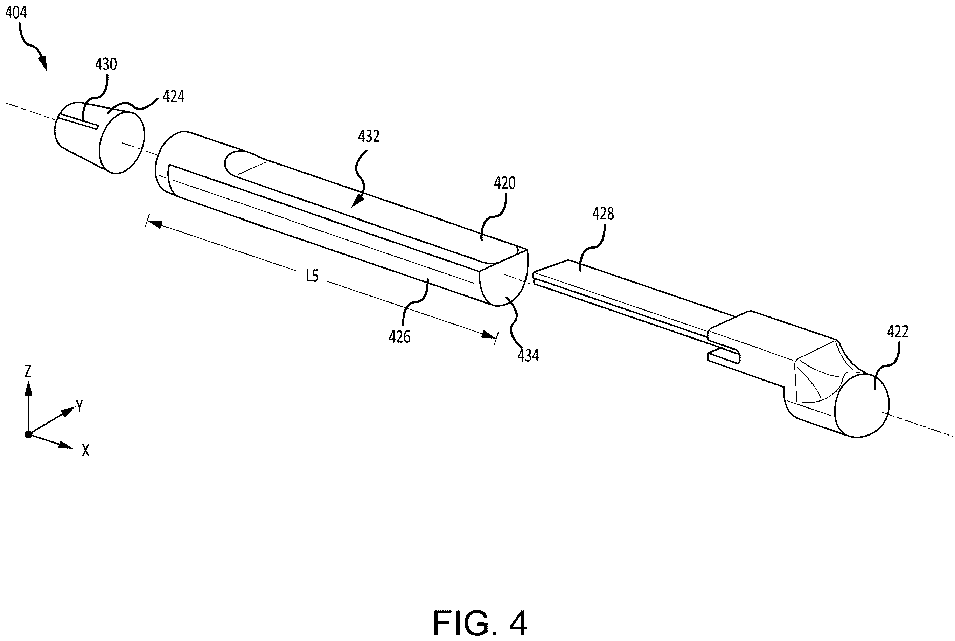

Referring now to FIG. 4, a supply glider 404 for carrying survival gear and/or supplies is illustrated, in accordance with various embodiments. Supply glider 404 includes similar components to those described above with respect to supply glider 304 in FIGS. 3A-3C, including a body 420, a nose 422, a tail 424, a container 426, wings 428, stabilators 430, and compartment 432, descriptions of which may not be repeated below. Supply glider 404 further includes an access 434 and container 426 has a length L5. In various embodiments, length L5 may be about 50% to about 95% of length L1 (i.e., the length of body 420, nose 422, and tail 424 as described above), and more specifically, about 80% to about 90% of length L1.

In various embodiments, access 434 may be located at a front end of container 426 (e.g., in the positive x-direction) adjacent nose 422. In various embodiments, access 434 may be located at a rear end of container 426 (e.g., in the negative x-direction) adjacent tail 424. In various embodiments, access 434 may be located along a top portion of container 426 (e.g., in the positive z-direction). In various embodiments, access 434 may include a door, a hatch, a covering, or a removable stopper, among others, to secure the contents of container 426. In various embodiments, access 434 may be an opening into container 426 that is secured by nose 422 and/or tail 424.

Nose 422 and/or tail 424 may be removably coupled to body 420. This allows body 420 to define container 426 so that compartment 432 may be larger than compartment 332 described above in FIGS. 3A-3C. In various embodiments, this may allow body 420 to be smaller, or shorter, than body 320 without reducing the storage capacity of container 426 as compared to container 326. In various embodiments, nose 422 and/or tail 424 may be threaded to be rotatably removed from body 420. In various embodiments, body 420 may act as compartment 432. In various embodiments, nose 422 may be removed to access container 426. In various embodiments, container 426 may slide out of body 420 (e.g., in the positive x-direction). In various embodiments, tail 424 may be removed to access container 426. In various embodiments, container 426 may slide out of body 420 (e.g., in the negative x-direction). In various embodiments, nose 422 and/or tail 424 may slide onto body 420 and be secured using one or more mechanical attachments including latches, buttons, hooks, thumb bolts, or press fit couplings, among others. In various embodiments, wings 428 may be coupled to nose 422 and removable from body 420. In various embodiments, wings 428 may be coupled to body 420 and therefore not removable with nose 422. It will be appreciated that other configurations of supply glider 404 are possible and considered within the scope of this disclosure.

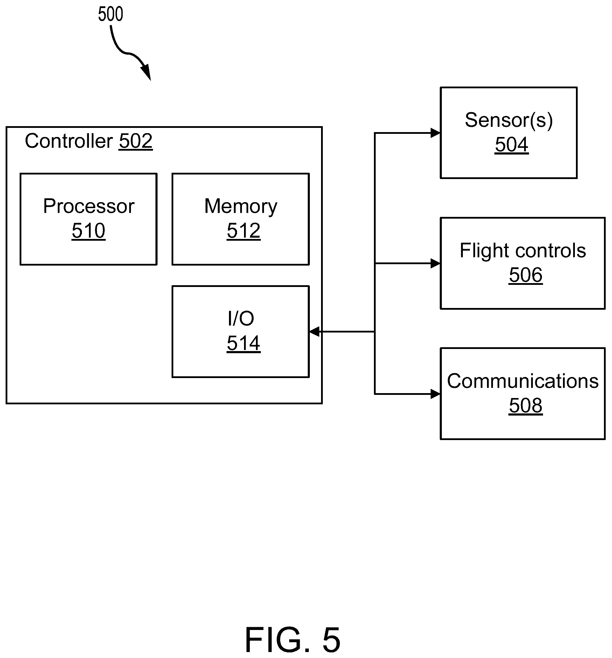

Referring now to FIG. 5, a control system 500 for a supply glider is illustrated, in accordance with various embodiments. In various embodiments, control system 500 may be used by supply glider 104, 204, 304, or 404 for navigation, control, and communication. Control system 500 includes a controller 502, a sensor 504, a flight control 506, and a communication module 508. In various embodiments, controller 502, sensor 504, flight control 506, and/or communication module 508 may be located in a nose (e.g., nose 322, 422) of the supply glider. In various embodiments, controller 502, sensor 504, flight control 506, and/or communication module 508 may additionally, or alternatively, be located in a body (e.g., body 320, 420) and/or a tail (e.g., tail 324, 424) of the supply glider.

Controller 502 includes a processor 510, a memory 512, and an input/output (I/O) 514. Processor 510 may comprise one or more processors configured to implement various logical operations in response to execution of instructions, for example, instructions stored on a non-transitory, tangible, computer-readable medium. The one or more processors can be a general purpose processor, a microprocessor, a microcontroller, a digital signal processor (DSP), an application specific integrated circuit (ASIC), a field programmable gate array (FPGA) or other programmable logic device, discrete or transistor logic, discrete hardware components, or any combination thereof.

Memory 512 may comprise memory to store data, executable instructions, system program instructions, and/or controller instructions to implement the control logic of processor 510. I/O 514 may include one or more ports configured to communicate with sensor 504, flight control 506, and/or communication module 508. In various embodiments, I/O 514 communicate using a controller area network (CAN bus), an inter-integrated circuit (I2C) bus, a universal serial bus (USB), an IEEE 802.3 (ethemet) network, or a serial communications interface, among others.

Sensor 504 may comprise multiple sensors that may be located adjacent to each other or spread out through the body of the supply glider. In various embodiments, sensor 504 may include one or more of an altimeter, an air speed sensor, a pressure sensor, a camera, a force sensor, a position sensor (e.g., global position satellite (GPS) system), or a vibration sensor, among others.

Flight control 506 may comprise multiple different flight controls including electric or mechanical connections to wings (e.g., wings 328, 428) and/or stabilators (e.g., stabilator 330, 430) of the supply glider. In various embodiments, flight control 506 may provide complex controls to guide the supply glider to a specific target zone and/or for tracking an ejection seat. In various embodiments, flight control 506 may provide simple controls for maintaining the glide path of the supply glider for as long as possible.

Communication module 508 may comprise multiple different communication modules. In various embodiments, communication module 508 may include IEEE 802.15.1 ("Bluetooth"), IEEE 802.15.4 ("Zigbee"), IEEE 802.11 ("Wi-Fi"), cellular (e.g., 3G, 4G, 5G, etc.), satellite, or other radio frequency (RF) modules (e.g., frequency modulation (FM), amplitude modulation, etc.), among others.

In various embodiments, controller 502 may be configured to activate in response to a signal. In various embodiments, the signal may be an ejection initiation. In various embodiments, the signal may be triggered by a pilot. In various embodiments, controller 502 may be online during a duration of a flight. Controller 502, and more specifically processor 510, may execute code that communicates with sensor 504 to identify a flight path and/or corrections to the flight path. In various embodiments, processor 510 may identify a target destination based on sensor 504. In various embodiments, the target destination may be an ejection seat, designated ground personnel, or a specific geographic location. In various embodiments, processor 510 may receive the target destination from communication module 508. The target destination be sent by satellite communication, radio communication, or infra-red (IR) communication, among others. Processor 510 may further execute code that communicates with flight control 506 to execute the identified flight path. In various embodiments, processor 510 may receive feedback from sensor 504 and provide updated commands to flight control 506 in response to the feedback.

In various embodiments, controller 502, and more specifically processor 510, may execute code that uses communication module 508 to communicate with an ejection seat to determine a status of the ejection seat including location, speed, and altitude, among others. Processor 510 is configured to execute code that identifies a flight path of the supply glider to maintain the supply glider at a safe distance from the ejection seat (e.g., about 100 feet (about 30.5 meters)). Accordingly, control system 500 is configured to receive sensor input, make flight course adjustments, and to communicate with other devices (e.g., the ejection seat).

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

The scope of the invention is to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Finally, it should be understood that any of the above-described concepts can be used alone or in combination with any or all of the other above-described concepts, insofar as they fall within the scope of the appended claims. Although various embodiments have been disclosed and described, one of ordinary skill in this art would recognize that certain modifications would come within the scope of the invention as defined by the claims.

## Claims

1. A system, comprising:
a host aircraft (102,202);
an ejection seat (108,208) disposed in a cockpit of the host aircraft (102,202), the ejection seat configured to eject from the host aircraft in response to an ejection signal;
a supply glider (104, 204, 304, 404) coupled to the host aircraft and configured to launch from the host aircraft, the supply glider including:
a body (320, 420);
a container (326, 426) detachably coupled to the body;
wings (328, 428) coupled to the body;
a sensor (504) disposed in the body; and
a flight control (506) configured to control a flight path of the supply glider;
a processor (510) disposed in the body and operatively coupled to the sensor and configured to receive sensor signals, and
a memory (512) operatively coupled to the processor, the memory comprising instructions stored thereon that, when executed by the processor, cause the processor to:
receive a first signal from the sensor; and provide updated commands to the flight control (506) to
modify the flight path of the supply glider based at least in part on the
received first signal;
the supply glider further comprising a communication module (508) coupled to the processor, wherein the instructions, when executed by the processor, further cause the processor to:
receive a communication from the communication module, the communication indicating flight information of the ejection seat; and
communicate with the flight control (506) to control the flight path of the supply glider to follow the ejection seat at a safe distance based at least in part on the received communication.

2. The system of claim 1, wherein the instructions, when executed by the processor, further cause the processor to:
identify a target destination, wherein the target destination is the ejection seat;
receive a second signal from the sensor; and
provide updated commands to the flight control (506) to modify the flight path based at least in part on the target destination and the second signal.

3. The system of claim 1 or 2, further comprising:
a launch controller disposed in the cockpit; and
a hardpoint mount (110, 210) disposed on the host aircraft, wherein the supply glider is configured to couple to the hardpoint mount and be deployed from the hardpoint mount in response to a launch signal from the launch controller and/or further comprising:
an ejection handle disposed in the cockpit and adjacent the ejection seat; and
a bay disposed in the host aircraft, the bay configured to store the supply glider and deploy the supply glider in response to an ejection signal from the ejection handle.

4. The system of any of claims 1 to 3, the supply glider further comprising:
a seal disposed between the body and the container; and
a plurality of mechanical attachments coupled to the body and configured to secure the container to the body.

5. The system of any preceding claim, wherein the container (326, 426) is disposed between a first end and a second end of the body; and
wherein the supply glider further comprises stabilators (330, 430) coupled to the body adjacent the second end.

6. The system of claim 5, the supply glider further comprising:
a nose (322, 422) coupled to the first end of the body; and
a tail (324, 424) coupled to the second end of the body; and optionally wherein the tail is configured to detach from the body providing access to the container through the second end of the body and/or wherein the nose is configured to detach from the body providing access to the container through the first end of the body.

7. The system of claim 5 or 6, wherein the container at least partially defines a bottom portion of the body, the supply glider further comprising:
a seal disposed between the body and the container; and
a mechanical attachment that is configured to couple the container to the body.

8. The system of claim 5, 6 or 7, wherein the wings (328, 4238) are retractable and the stabilators (330, 430) are retractable.

9. The system of any preceding claim, wherein the body has a first length and the container has a second length that is about 75% to about 90% of the first length.

10. The system of claim 1, wherein the supply glider is configured to be launched from an attachment point of the host aircraft in response to a launch signal.

11. The system of any preceding claim, wherein the supply glider is configured to be launched after an initiation of an ejection seat (108, 208).

12. The system of any preceding claim, wherein the sensor includes one of an altimeter, an air speed sensor, a pressure sensor, a camera, a force sensor, a position sensor, or a vibration sensor.

## Patentansprüche

1. Ein System, umfassend:
ein Trägerflugzeug (102, 202);
einen Schleudersitz (108, 208), der in einem Cockpit des Trägerflugzeugs (102, 202) angeordnet ist, wobei der Schleudersitz dazu ausgelegt ist, als Reaktion auf ein Schleudersignal aus dem Trägerflugzeug ausgeschleudert zu werden;
einen Versorgungsgleiter (104, 204, 304, 404), der mit dem Trägerflugzeug gekoppelt und dazu ausgelegt ist, von dem Trägerflugzeug gestartet zu werden, wobei der Versorgungsgleiter umfasst:
einen Körper (320, 420);
einen Behälter (326, 426), der lösbar mit dem Körper gekoppelt ist;
Flügel (328, 428), die mit dem Körper gekoppelt sind;
einen Sensor (504), der in dem Körper angeordnet ist; und
eine Flugsteuerung (506), die dazu ausgelegt ist, einen Flugpfad des Versorgungsgleiters zu steuern;
einen Prozessor (510), der in dem Körper angeordnet und betriebsmäßig mit dem Sensor gekoppelt und dazu ausgelegt ist, Sensorsignale zu empfangen, und
einen Speicher (512), der betriebsmäßig mit dem Prozessor gekoppelt ist, wobei der Speicher darauf gespeicherte Anweisungen umfasst, die bei Ausführung durch den Prozessor den Prozessor veranlassen zum:
Empfangen eines ersten Signals von dem Sensor; und Bereitstellen aktualisierter Befehle an die Flugsteuerung (506), um
den Flugpfad des Versorgungsgleiters basierend zumindest teilweise auf dem empfangenen ersten Signal zu ändern;
wobei der Versorgungsgleiter ferner ein Kommunikationsmodul (508) umfasst, das mit dem Prozessor gekoppelt ist, wobei die Anweisungen bei Ausführung durch den Prozessor den Prozessor ferner veranlassen zum:
Empfangen einer Kommunikation von dem Kommunikationsmodul, wobei die Kommunikation Fluginformationen des Schleudersitzes anzeigt; und
Kommunizieren mit der Flugsteuerung (506), um den Flugpfad des Versorgungsgleiters so zu steuern, dass er dem Schleudersitz in einem sicheren Abstand folgt, basierend zumindest teilweise auf der empfangenen Kommunikation.

2. Das System nach Anspruch 1, wobei die Anweisungen bei Ausführung durch den Prozessor den Prozessor ferner veranlassen zum:
Identifizieren eines Zielbestimmungsorts, wobei der Zielbestimmungsort der Schleudersitz ist;
Empfangen eines zweiten Signals von dem Sensor; und
Bereitstellen aktualisierter Befehle an die Flugsteuerung (506), um den Flugpfad basierend zumindest teilweise auf dem Zielbestimmungsort und dem zweiten Signal zu ändern.

3. Das System nach Anspruch 1 oder 2, ferner umfassend:
eine Startsteuerung, die in dem Cockpit angeordnet ist; und
einen Aufhängepunkt (110, 210), der an dem Trägerflugzeug angeordnet ist, wobei der Versorgungsgleiter dazu ausgelegt ist, mit dem Aufhängepunkt gekoppelt zu werden und als Reaktion auf ein Startsignal von der Startsteuerung von dem Aufhängepunkt ausgebracht zu werden und/oder ferner umfassend:
einen Schleudergriff, der in dem Cockpit und benachbart zu dem Schleudersitz angeordnet ist; und
einen Schacht, der in dem Trägerflugzeug angeordnet ist, wobei der Schacht dazu ausgelegt ist, den Versorgungsgleiter zu lagern und den Versorgungsgleiter als Reaktion auf ein Schleudersignal von dem Schleudergriff auszubringen.

4. Das System nach einem der Ansprüche 1 bis 3, wobei der Versorgungsgleiter ferner umfasst:
eine Dichtung, die zwischen dem Körper und dem Behälter angeordnet ist; und
eine Vielzahl von mechanischen Befestigungen, die mit dem Körper gekoppelt und dazu ausgelegt sind, den Behälter an dem Körper zu sichern.

5. Das System nach einem der vorangehenden Ansprüche, wobei der Behälter (326, 426) zwischen einem ersten Ende und einem zweiten Ende des Körpers angeordnet ist; und
wobei der Versorgungsgleiter ferner Höhenruder (330, 430) umfasst, die mit dem Körper benachbart zu dem zweiten Ende gekoppelt sind.

6. Das System nach Anspruch 5, wobei der Versorgungsgleiter ferner umfasst:
eine Nase (322, 422), die mit dem ersten Ende des Körpers gekoppelt ist; und
ein Heck (324, 424), das mit dem zweiten Ende des Körpers gekoppelt ist; und optional wobei das Heck dazu ausgelegt ist, sich von dem Körper zu lösen, um einen Zugang zu dem Behälter durch das zweite Ende des Körpers bereitzustellen und/oder wobei die Nase dazu ausgelegt ist, sich von dem Körper zu lösen, um einen Zugang zu dem Behälter durch das erste Ende des Körpers bereitzustellen.

7. Das System nach Anspruch 5 oder 6, wobei der Behälter zumindest teilweise einen unteren Abschnitt des Körpers definiert, wobei der Versorgungsgleiter ferner umfasst:
eine Dichtung, die zwischen dem Körper und dem Behälter angeordnet ist; und
eine mechanische Befestigung, die dazu ausgelegt ist, den Behälter mit dem Körper zu koppeln.

8. Das System nach Anspruch 5, 6 oder 7, wobei die Flügel (328, 4238) einfahrbar sind und die Höhenruder (330, 430) einfahrbar sind.

9. Das System nach einem der vorangehenden Ansprüche, wobei der Körper eine erste Länge aufweist und der Behälter eine zweite Länge aufweist, die etwa 75 % bis etwa 90 % der ersten Länge beträgt.

10. Das System nach Anspruch 1, wobei der Versorgungsgleiter dazu ausgelegt ist, von einem Befestigungspunkt des Trägerflugzeugs als Reaktion auf ein Startsignal gestartet zu werden.

11. Das System nach einem der vorangehenden Ansprüche, wobei der Versorgungsgleiter dazu ausgelegt ist, nach einer Einleitung eines Schleudersitzes (108, 208) gestartet zu werden.

12. Das System nach einem der vorangehenden Ansprüche, wobei der Sensor einen aus einem Höhenmesser, einem Fahrtmesser, einem Drucksensor, einer Kamera, einem Kraftsensor, einem Positionssensor oder einem Vibrationssensor umfasst.

## Revendications

1. Un système, comprenant :
un aéronef hôte (102, 202) ;
un siège éjectable (108, 208) disposé dans un cockpit de l'aéronef hôte (102, 202), le siège éjectable étant configuré pour s'éjecter de l'aéronef hôte en réponse à un signal d'éjection ;
un planeur de ravitaillement (104, 204, 304, 404) couplé à l'aéronef hôte et configuré pour être lancé depuis l'aéronef hôte, le planeur de ravitaillement comprenant :
un corps (320, 420) ;
un conteneur (326, 426) couplé de manière détachable au corps ;
des ailes (328, 428) couplées au corps ;
un capteur (504) disposé dans le corps ; et
une commande de vol (506) configurée pour commander une trajectoire de vol du planeur de ravitaillement ;
un processeur (510) disposé dans le corps et couplé de manière opérationnelle au capteur et configuré pour recevoir des signaux de capteur, et
une mémoire (512) couplée de manière opérationnelle au processeur, la mémoire comprenant des instructions stockées sur celle-ci qui, lorsqu'elles sont exécutées par le processeur, amènent le processeur à :
recevoir un premier signal provenant du capteur ; et fournir des commandes mises à jour à la commande de vol (506) pour
modifier la trajectoire de vol du planeur de ravitaillement sur la base, au moins en partie, du premier signal reçu ;
le planeur de ravitaillement comprenant en outre un module de communication (508) couplé au processeur, dans lequel les instructions, lorsqu'elles sont exécutées par le processeur, amènent en outre le processeur à :
recevoir une communication provenant du module de communication, la communication indiquant des informations de vol du siège éjectable ; et
communiquer avec la commande de vol (506) pour commander la trajectoire de vol du planeur de ravitaillement afin de suivre le siège éjectable à une distance de sécurité sur la base, au moins en partie, de la communication reçue.

2. Le système de la revendication 1, dans lequel les instructions, lorsqu'elles sont exécutées par le processeur, amènent en outre le processeur à :
identifier une destination cible, dans lequel la destination cible est le siège éjectable ;
recevoir un second signal provenant du capteur ; et
fournir des commandes mises à jour à la commande de vol (506) pour modifier la trajectoire de vol sur la base, au moins en partie, de la destination cible et du second signal.

3. Le système de la revendication 1 ou 2, comprenant en outre :
un contrôleur de lancement disposé dans le cockpit ; et
un point d'ancrage (110, 210) disposé sur l'aéronef hôte, dans lequel le planeur de ravitaillement est configuré pour se coupler au point d'ancrage et être déployé depuis le point d'ancrage en réponse à un signal de lancement provenant du contrôleur de lancement et/ou comprenant en outre :
une poignée d'éjection disposée dans le cockpit et adjacente au siège éjectable ; et
une soute disposée dans l'aéronef hôte, la soute étant configurée pour stocker le planeur de ravitaillement et déployer le planeur de ravitaillement en réponse à un signal d'éjection provenant de la poignée d'éjection.

4. Le système de l'une quelconque des revendications 1 à 3, le planeur de ravitaillement comprenant en outre :
un joint d'étanchéité disposé entre le corps et le conteneur ; et
une pluralité de fixations mécaniques couplées au corps et configurées pour fixer le conteneur au corps.

5. Le système de l'une quelconque des revendications précédentes, dans lequel le conteneur (326, 426) est disposé entre une première extrémité et une seconde extrémité du corps ; et
dans lequel le planeur de ravitaillement comprend en outre des stabilisateurs (330, 430) couplés au corps adjacents à la seconde extrémité.

6. Le système de la revendication 5, le planeur de ravitaillement comprenant en outre :
un nez (322, 422) couplé à la première extrémité du corps ; et
une queue (324, 424) couplée à la seconde extrémité du corps ; et facultativement dans lequel la queue est configurée pour se détacher du corps en fournissant un accès au conteneur à travers la seconde extrémité du corps et/ou dans lequel le nez est configuré pour se détacher du corps en fournissant un accès au conteneur à travers la première extrémité du corps.

7. Le système de la revendication 5, 6 ou 7, dans lequel le conteneur définit au moins partiellement une partie inférieure du corps, le planeur de ravitaillement comprenant en outre :
un joint d'étanchéité disposé entre le corps et le conteneur ; et
une fixation mécanique qui est configurée pour coupler le conteneur au corps.

8. Le système de la revendication 5, 6 ou 7, dans lequel les ailes (328, 4238) sont rétractables et les stabilisateurs (330, 430) sont rétractables.

9. Le système de l'une quelconque des revendications précédentes, dans lequel le corps a une première longueur et le conteneur a une seconde longueur qui est d'environ 75 % à environ 90 % de la première longueur.

10. Le système de la revendication 1, dans lequel le planeur de ravitaillement est configuré pour être lancé depuis un point de fixation de l'aéronef hôte en réponse à un signal de lancement.

11. Le système de l'une quelconque des revendications précédentes, dans lequel le planeur de ravitaillement est configuré pour être lancé après une initiation d'un siège éjectable (108, 208).

12. Le système de l'une quelconque des revendications précédentes, dans lequel le capteur comprend l'un parmi un altimètre, un capteur de vitesse aérodynamique, un capteur de pression, une caméra, un capteur de force, un capteur de position, ou un capteur de vibration.
